# EUROPÄISCHE PATENTANMELDUNG

(11) **EP 3 869 761 A1**
(43) Veröffentlichungstag der Anmeldung: **25.08.2021**
(21) Anmeldenummer: 20157877.0
(22) Anmeldetag: 18.02.2020
(51) Int. Cl.: H04L 29/06, H04W 4/70, H04W 4/80

(54) **VERFAHREN ZUR INBETRIEBNAHME EINES GERÄTES INNERHALB EINER NETZWERKUMGEBUNG**

(71) Anmelder: Siemens Aktiengesellschaft, 80333 München (DE)
(72) Erfinder: Falk, Rainer, 85586 Poing (DE); Fries, Steffen, 85598 Baldham (DE)

(57) **Zusammenfassung**

Die Erfindung beansprucht ein Verfahren zur Inbetriebnahme eines Gerätes (FD new) innerhalb einer in ein oder mehrere Domänen (D) unterteilten Netzwerkumgebung (NW), aufweisend folgende Schritte:
a) Authentisieren des Gerätes an einer für die Netzwerkumgebung zuständigen Authentifizierungseinheit (S) anhand einer Berechtigungsinformation,
b) Überprüfen einer zusätzlichen Berechtigungsinformation, die über das Gerät von einer dritten Stelle (H), die in derselben die in derselben physikalischen Umgebung angeordnet oder derselben Domäne wie das Gerät registriert ist, an die Authentifizierungseinheit übermittelt wird, gegenüber einer vorkonfigurierten oder ermittelten und /oder erhaltenen Referenz-Berechtigungsinformation,
c) wobei daraus ein positives Überprüfungsergebnis resultiert, wenn die zusätzliche Berechtigungsinformation mit der Referenz-Berechtigungsinformation zu mindestens einem vorgebbaren Grad übereinstimmt,
d) und direkt oder indirekt an eine Domänenregistrierungseinheit (R) der Domäne weitergegeben wird,
e) Zulassen der Registrierung des Geräts an der Domänenregistrierungseinheit bei positivem Prüfungsergebnis,
f) Durchführung der Inbetriebnahme des Geräts nach erfolgreicher Registrierung, oder
g) Zurückweisen der Authentifikation des Gerätes bei einem negativen Überprüfungsergebnisses.

## Beschreibung

Die Erfindung betrifft ein Verfahren zur Inbetriebnahme eines Gerätes, insbesondere eines IOT-Gerätes, innerhalb einer Netzwerkumgebung.

Das Registrieren von Geräten, insbesondere IoT-Geräten, bei einem Backend-Dienst (Cloud, Edge, anderes Subnetzwerk) oder einem lokalen Dienst, auch als Onboarding bezeichnet, soll idealerweise automatisiert werden. Das Registrieren erfolgt üblicherweise im Rahmen der Geräte-Installation, z.B. bei der erstmaligen Inbetriebnahme oder bei einer Teilinbetriebnahme z.B. beim Komponententausch. Der Wunsch dabei ist, bei der Installation ein Gerät nur mit Stromzufuhr und Netzwerk verbinden zu müssen, ohne dass weitere lokale Aktionen durch einen Service-Techniker notwendig sind. Dabei sollte sichergestellt sein, dass nicht ein Gerät in einem falschen, nicht vorgesehenen Netzwerk bzw. in einer falschen Domäne des Netzwerks - wenn dieses in mehrere Domänen bzw. Zellen unterteilbar und/oder unterteilt ist - in Betrieb genommen wird. Neben der eigentlichen Autorisierung einer Inbetriebnahme unter Nutzung einer Authentisierungsinformation des Gerätes sind jedoch auch weitere Informationen notwendig, die im weiteren Lebenszyklus des Gerätes als Teil einer Anlage benötigt werden können. Hierzu zählt zum Beispiel der physikalische Ort, an dem ein Gerät verbaut wurde oder auch die Information, durch welchen Servicetechniker (als Individuum oder Teil einer Gruppe/Firma) die Installation durchgeführt wurde.

Eine bekannte Methode ist das sogenannte Secure Zero Touch Provisioning (SZTP, RFC 8572 (https://tools.ietf.org/html/rfc8572)). Diese beschreibt ein Verfahren zur sicheren Inbetriebnahme unter Nutzung eines Vouchers. Hierbei wird im Voucher durch den Hersteller des Gerätes die Zielnetzwerkdomäne bestätigt. Der Voucher (definiert in RFC 8366, https://tools.ietf.org/html/rfc8366) wird direkt vom Hersteller durch das Endgerät abgefragt.
Eine weitere Methode Bootstrapping of Remote Secure Key Infrastructures (BRSKI, https://datatracker.ietf.org/doc/draftietf-anima-bootstrapping-keyinfra/) definiert ein ähnliches Verfahren wie im RFC 8572 beschrieben. Auch hier wird ein Voucher genutzt, um Informationen zur Zieldomäne zu transportieren. Die Kommunikation erfolgt jedoch nicht direkt vom Gerät zum Hersteller, sondern wird über einen Registrierungsservice geleitet.

Es ist Aufgabe der vorliegenden Erfindung, eine Möglichkeit zu schaffen, um ein Gerät automatisiert bei einer Domänenregistrierungseinheit bzw. einem Backend-/Edge-Dienst zu registrieren sowie um zusätzliche Informationen bei der Inbetriebnahme automatisch zu erfassen.

Die Aufgabe wird durch die in den unabhängigen Ansprüchen beschriebenen Merkmale gelöst. In den abhängigen Ansprüchen sind vorteilhafte Weiterbildungen der Erfindung beansprucht.

Die Erfindung beansprucht ein Verfahren zur - vorzugsweise automatisierten - Inbetriebnahme eines Gerätes (z.B. eines IOT-Gerätes) innerhalb einer Netzwerkumgebung, aufweisend folgende Schritte:
a) Authentisieren des Gerätes an einer für die Netzwerkumgebung zuständigen und vorzugsweise abgesetzten Authentifizierungseinheit anhand einer Berechtigungsinformation,
b) Überprüfen (ggf. durch die Authentifizierungseinheit) einer zusätzlichen Berechtigungsinformation die über das Gerät von einer dritten Stelle (z.B. Smartphone eines Service Technikers oder NFC/Bluetooth Beacon oder WLAN SSID Information der Umgebung, etc.), die in derselben physikalischen Umgebung angeordnet und/oder in derselben Domäne wie das Gerät registriert ist, an die Authentifizierungseinheit übermittelt wird, gegenüber einer vorkonfigurierten oder ermittelten und/oder erhaltenen Referenz-Berechtigungsinformation,
c) wobei daraus ein positives Überprüfungsergebnis resultiert, wenn die zusätzliche Berechtigungsinformation mit der Referenz-Berechtigungsinformation zu mindestens einem vorgebbaren Grad übereinstimmt,
d) und das Überprüfungsergebnis direkt oder indirekt (vorzugsweise über das Gerät) an eine Domänenregistrierungseinheit (R) der Domäne weitergegeben wird,
e) Zulassen der Registrierung des Geräts an der Domänenregistrierungseinheit bei positivem Überprüfungsergebnis,
f) Durchführung der Inbetriebnahme des Geräts nach erfolgreicher Registrierung, oder
g) Zurückweisen der Authentifikation des Gerätes bei einem negativen Überprüfungsergebnisses.

Die obigen Schritte b), c), d), e), f) oder b), c), d), g) können in einem oder mehreren vorgebbaren zeitlichen Abständen oder nach einem oder mehreren Ereigniseintritten (z.B. Gerät wechselt von einer Domaine - z.B. ausgeprägt als Fertigungszelle - in eine andere Domäne) wiederholt werden.

Die Netzwerkumgebung ist in mehrere Domänen unterteilbar und/oder in mehrere Domänen unterteilt. Bei der Netzwerkumgebung kann es sich z.B. um ein Automatisierungsnetzwerk wie z.B. Profinet, Time Sensitive Network etc.) handeln. Eine Domäne der Netzwerkumgebung kann dabei ein physikalisch oder logisch separiertes Teilnetz sein, z.B. ein Teilnetz einer Fertigungszelle oder ein internes Steuerungsnetzwerk einer Werkzeugmaschine. Das Teilnetzwerk einer Domäne kann dabei über ein Netzwerk-Gateway (z.B. Switch, Router, Firewall, VPN-Gateway) mit anderen Teilnetzwerken der Netzwerkumgebung gekoppelt sein. Weitere verschiedene Ausprägungen der Domäne(n) sind denkbar.

Mit der Erfindung kann sichergestellt werden, dass Geräte bei der Inbetriebnahme in einer neuen Domäne ihre Positionsinformationen bzw. andere Informationen der Netzwerkumgebung mit übermitteln. Dies erleichtert zum einen das Erstellen eines Inventories (Inventar- bzw. Geräteverzeichnisses) der Domäne, da mittels dieser Information nicht nur die netzwerkbasierte Lokation-Information wie IP-Adresse mit abgespeichert werden kann, sondern auch die räumlich basierte Information z.B. GPS-Koordinaten bzw. Wifi-Zelle (z.B. SSID oder MAC-Adresse einer WLAN-Basisstation) oder eine Mobilfunkbasisstation eines zellulären Mobilfunksystems (UMTS, LTE, 5G). Dies erleichtert insbesondere im Servicefall das schnelle Auffinden der Geräte.

Eine Berechtigungsinformation bzw. ein Berechtigungsnachweis kann eine Datenstruktur, z.B. XML, JSON, ASCII, ASN.1 sein, die eine Berechtigungsinformation oder eine zum Berechtigungsnachweis verwendbare Umgebungsinformation umfasst.
Bei der Inbetriebnahme-Registrierungsaktion kann eine in der zusätzlichen Berechtigungsinformationen enthaltene Information einer bei der Geräteauthentisierung manipulationsgeschützt ermittelten Gerät-Identifizierungsinformation zugeordnet im Inventory abgespeichert werden.

Die zusätzliche Berechtigungsinformation kann geographische Informationen zum Gerät (z.B. geographische Koordinaten eines satellitengestützten Navigationssystems wie GPS, Galileo, Beidou, Glonass, eine Region, eine Domäne oder Fertigungszelle, eine Maschinenzugehörigkeit, Hardwareplatzierung etc.) umfassen. In einer Ausprägung des Berechtigungsnachweises kann es bei der in der zusätzlichen Berechtigungsinformation enthaltene Information sich insbesondere um eine Ortsangabe, z.B. Koordinaten (z.B. geographische Länge und Breite oder um eine logische Ortsinformation wie ein Standort, Gebäudenummer und Raumnummer handeln). Dies ermöglicht, bei einer nachfolgenden Authentisierung des Geräts, z.B. beim Aufbau einer Kommunikationsverbindung zur Übertragung von Steuerdaten oder Diagnosedaten, die bei der Inbetriebnahme gespeicherte Information abzufragen und auf Zulässigkeit für den Zweck der aufgebauten Verbindung zu prüfen. D.h. die weitere Kommunikationsverbindung wird abhängig von der bei der Inbetriebnahme gespeicherten Information zugelassen oder eingeschränkt zugelassen, d.h. die Datenübertragung wird durch eine Datenfilterung begrenzt.

Eine Information der zusätzlichen Berechtigungsinformation kann über eine Drahtlosverbindung, z.B. Bluetooth, NFC, IrDA, WLAN, zellulärer Mobilfunk ermittelt werden. So kann insbesondere eine Information erfasst werden, die von einem Bluetooth-Beacon oder ein Netzwerkname eines Zugangspunkts (z.B. WLAN SSID) ausgesendet wird, und als Teil der zusätzlichen Berechtigungsinformation übermittelt werden. Weiterhin ist es möglich, bei einer Satellitenkommunikation bzw. satellitengestützen Navigation die Identifier (SVID, space vehicle ID) der empfangbaren Satelliten und ggf. die Signalstärke oder Signalqualität (z.B. Fehlerrate) zu ermitteln. Ggf. kann das Feature "FindMe" beispielsweise von der Firma Apple direkt mit genutzt werden, um die Inbetriebnahme an ein bluethoothfähiges Gerät eines autorisierten Servicetechniker zu binden, indem ein nahegelegenes Bluetooth Beacon Signal in derselben Art verarbeitet wird wie von einem fest installierten Beacon.

Die zusätzliche Berechtigungsinformation kann hierbei statische und/oder dynamische (z.B. Ad-Hoc Netzwerk, Bluetooth, NFC, WLAN direkt, IrDA, Mobilfunk) Netzzugangsinformationen umfassen.

Die zusätzliche Berechtigungsinformation kann eine Adressinformation zur Authentifizierungseinheit umfassen, wenn die Authentifizierungseinheit abgesetzt außerhalb der Domäne und/oder der Netzwerkumgebung angeordnet ist. Die Adressinformation ist zweckmäßig, wenn die Authentifizierungseinheit nicht lokal in der Netzwerkumgebung, sondern abgesetzt außerhalb der Netzwerkumgebung angeordnet ist.

Unter einer abgesetzten Authentifizierungseinheit wird insbesondere eine Authentifizierungseinheit verstanden, die in einer anderen Domäne der Netzwerkumgebung angeordnet ist als das in Betrieb genommen Gerät.

Die zusätzliche Berechtigungsinformation kann in eine Zertifikatsanfrage vom Gerät an die Authentifizierungseinheit oder in ein vom Gerät selbst ausgestelltes Zertifikat eingebettet sein.

Ein weiterer Aspekt der Erfindung ist ein Gerät, das zur Inbetriebnahme innerhalb einer Netzwerkumgebung geeignet ist, aufweisend:
a) zumindest eine Einheit zum Authentisieren des Gerätes an einer für die Netzwerkumgebung zuständigen Authentifizierungseinheit anhand einer Berechtigungsinformation
b) zumindest einer Einheit zum Übermitteln einer zusätzlichen Berechtigungsinformation zur Überprüfung an die Authentifizierungseinheit, wobei das Gerät von einer dritten Stelle, die in derselben physikalischen Umgebung angeordnet und/oder in derselben Domäne wie das Gerät registriert ist, die zusätzliche Berechtigungsinformation erhält,
c) wobei aus der Überprüfung ein positives Überprüfungsergebnis resultiert, wenn die zusätzliche Berechtigungsinformation mit der Referenz-Berechtigungsinformation zu mindestens einem vorgebbaren Grad übereinstimmt,
d) und das Überprüfungsergebnis direkt oder indirekt (vorzugsweise über das Gerät) an eine Domänenregistrierungseinheit der Domäne weitergegeben wird, und
e) zumindest eine Inbetriebnahmeeinheit, die dazu ausgelegt ist, das Geräts bei positivem Überprüfungsergebnis nach einer erfolgreichen Registrierung des Geräts an der Domänenregistrierungseinheit in Betrieb zu nehmen.

Die Netzwerkumgebung kann hierbei in ein oder mehrere Domänen unterteilbar und/oder unterteilt sein.
Ein weiterer Aspekt der Erfindung ist eine Authentifizierungseinheit zuständig für eine Netzwerkumgebung, in der ein Gerät in Betrieb genommen werden kann, aufweisend:
a) zumindest eine Einheit zum Authentisieren eines Gerätes,
b) zumindest eine Einheit zum Überprüfen einer zusätzlichen Berechtigungsinformation, die über das Gerät von einer dritten Stelle übermittelt wird, gegenüber eines vorkonfigurierten oder ermittelten und/oder erhaltenen Referenz-Berechtigungsinformation,
c) wobei daraus ein positives Überprüfungsergebnis resultiert, wenn die zusätzliche Berechtigungsinformation mit der Referenz-Berechtigungsinformation zu mindestens einem vorgebbaren Grad übereinstimmt, und
d) zumindest eine Einheit zur Ausgabe des Überprüfungsergebnisses an das Gerät mit dem Zweck der Durchführung und/oder Zurückweisung dessen Inbetriebnahme.

Die zusätzliche Berechtigungsinformation kann eine Adressinformation zur Authentifizierungseinheit umfassen, wenn die Authentifizierungseinheit abgesetzt außerhalb der Domaine oder der Netzwerkumgebung angeordnet ist.

Ein weiterer Aspekt der Erfindung ist eine Domänenregistrierungseinheit für eine Inbetriebnahme eines Gerätes innerhalb einer in mehrere Domänen unterteilten Netzwerkumgebung, aufweisend:
- eine Empfangseinheit, die dazu ausgelegt ist, ein Überprüfungsergebnis direkt oder indirekt von einer Authentifizierungseinheit zu empfangen, welche eine zusätzliche Berechtigungsinformation gegenüber einer Referenz-Berechtigungsinformation überprüft und
- zumindest eine Inbetriebnahmeeinheit, die dazu ausgelegt ist, das Geräts bei positivem Überprüfungsergebnis für eine Inbetriebnahme zu registrieren.

Ein weiterer Aspekt der Erfindung ist eine Anordnung umfassend das oben genannte Gerät, eine Authentifizierungseinheit der oben genannten Art und eine Domainregistrierungseinheit der oben genannten Art.

Das Verfahren ist vorzugsweise computerimplementiert. Unter "computerimplementiert" kann im Zusammenhang mit der Erfindung eine Implementierung des Verfahrens verstanden werden, bei dem insbesondere ein Prozessor mindestens einen Verfahrensschritt ausführt.

Eine Weiterbildung der Erfindung sieht vor, dass
eine Einheit bzw. Komponente, insbesondere eine Kommunikationseinheit bzw. Netzwerkkomponente, als eine HardwareKomponente ausgebildet ist. Eine Einheit bzw. Komponente kann einen Prozessor umfassen. Subeinheiten einer größeren Einheit bzw. Hardwarekomponente können in Software, Firmware bzw. wiederum in Hardware implementiert sein.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

Ein weiterer Aspekt der Erfindung ist ein Computerprogramm bzw. -produkt, das verteilt in einen Speicher einer Authentifizierungseinheit und in einem Speicher in einem Gerät gespeichert ist und/oder gespeichert wird und jeweils in eine Prozessoreinheit ladbar ist, umfassend Programmcodeteile, die dazu ausgelegt sind, das Verfahren nach der oben genannten Art auszuführen.

Ein Computerprogrammprodukt, wie zum Beispiel ein Computerprogramm-Mittel, kann beispielsweise als Speichermedium oder Datenträger, wie zum Beispiel als Speicherkarte, USB-Stick, CD-ROM, DVD oder auch in Form einer herunterladbaren Datei von einem Server in einem Netzwerk bereitgestellt oder geliefert werden.

Die Vorrichtungen, Einrichtungen, Einheiten bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigen:
- Figur 1: eine mögliche Architektur einer Netzwerkumgebung für ein (IoT-)Gerät, und
- Figur 2: einen möglichen Nachrichtenverlauf zwischen den verschiedenen Einheiten bzw. Komponenten innerhalb des Netzwerkes.

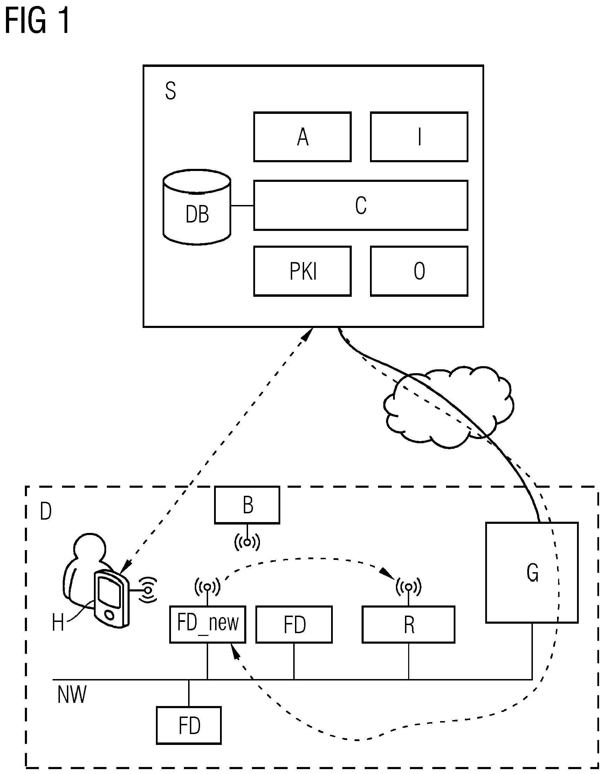

Figur 1 zeigt eine mögliche Anordnung für eine Netzwerkumgebung D eines Netzwerks NW, innerhalb welchen ein Gerät FD_new, insbesondere ein IoT-Gerät bzw. Feldgerät, neben weiteren installierten Geräten FD in Betrieb genommen werden soll. Das Netzwerk kann hierbei als Netzwerk innerhalb einer Automatisierungsumgebung bzw. -anlage z.B. Profinet, ausgebildet sein. Hierbei kann die Netzwerkumgebung eine Domäne - wie in der Figur 1 angedeutet - oder mehrerer Domänen umfassen.

Dabei wird von einem Onboarding-Prozess (Integrationsprozess) ausgegangen, bei der ein neues Gerät FD new sich in der Domäne registrieren muss, bevor es mit domänenspezifischen Informationen (Credentials, Routing Infos, Applikationskonfiguration, etc.) versorgt wird. Für dieses Onboarding können Protokollframeworks wie BRSKI genutzt werden. Ziel dabei ist es, basierend auf einem existierenden Geräte-Credential (eine erste Berechtigungsinformation) einer Erstanmeldung in der neuen Domäne durchzuführen und dabei eine beiderseitige Vertrauensbeziehung zwischen Gerät und Domäne aufzubauen. Das Feldgerät FD_new (z.B. ein Feuermelder, ein Sensor oder Aktor, oder eine neue Komponente einer Industrieanlage) hat einen Bluetooth-Empfänger (beispielhaft) und kann damit die Signale von Bluetooth Beacons B empfangen. Eine Authentisierung bzw. Registrierung vom Gerät FD_new kann nun entweder rein lokal bei einer Domänenregistrierungseinheit oder in einer zentralen Authentifizierungseinheit S vorgenommen werden.

Des Weiteren können in der Netzwerkumgebung D sogenannte festinstallierte Bluethooth- bzw. NFC-Beacon oder auch ein Handheld H z.B. bluetoothfähiges Smartphone bzw. Tablet eines Service-Technikers vorhanden sein.
Über einen Knotenpunkt bzw. Gateway G kann ein Authentisieren des Geräts FD_new an einer für die Netzwerkumgebung zuständigen Authentifizierungseinheit S anhand einer ersten Berechtigungsinformation durchgeführt werden. Die vom Netzwerk NW abgesetzt angeordnete und gewöhnlicherweise außerhalb der Domäne angeordnete Authentifizierungseinheit S umfasst eine Einheit A zum Authentisieren des Geräts und umfasst eine Konfiguration C mit einer Datenbasis DB, welche Benutzer- bzw. Geräteinformationen umfassen kann, um Berechtigungsinformationen entsprechend überprüfen zu können. Des Weiteren sind eine Einheit I zur Integritätsprüfung und eine PKI-Schlüssel-Service-Einheit PKI denkbar. In einer Einheit O zum Überprüfen einer zweiten zusätzlichen Berechtigungsinformationen (L-Info), welcher in der ersten Berechtigungsinformation integriert sein kann, kann eine Überprüfung der zusätzlichen Berechtigungsinformation, die über das Gerät FD_new von einer dritten Stelle z.B. Handheld H des Service Technikers bzw. NFC/Bluetooth Beacon B übermittelt wird, durchgeführt werden. Die dritte Stelle ist dabei in derselben physikalischen Umgebung angeordnet oder derselben Domäne wie das Gerät registriert.

Wenn die zusätzliche Berechtigungsinformation mit einer Referenz-Berechtigungsinformation zu mindestens einem vorgebbaren Grad übereinstimmt, wird dieser direkt oder indirekt beispielsweise über das Gerät an die Domänenregistrierungseinheit R, welche mit einer entsprechenden nicht dargestellten Empfangseinheit und Inbetriebnahmeeinheit ausgestattet ist, weitergegeben. Alternativ kann diese Authentisierungseinheit S sowie die Überprüfungseinheit O auch als Teil des Domänenregistrierungseinheit R ausgebildet sein.

Die Referenz-Berechtigungsinformation kann in der Einheit C vorkonfiguriert sein oder zuvor über das Handheld H des Servicetechnikers an die Authentifizierungseinheit S übermittelt oder anderweitig z.B. über die fest installierten Beacon B ermittelt werden. Dabei werden die Signale der Bluetooth Beacons B mit bei der initialen Anmeldung als Teil von L-Info transportiert.

Die Registrierung des Geräts FD_new wird bei positivem Überprüfungsergebnis an der Domänenregistrierungseinheit R zugelassen und das Gerät wird nach erfolgreicher Registrierung in Betrieb genommen. Bei negativem Überprüfungsergebnis wird die Durchführung der Inbetriebnahme durch Zurück- bzw. Abweisung der Registrierung von der Domänenregistrierungseinheit zurückgewiesen bzw. blockiert.

Somit kann ein Gerät bei der Inbetriebnahme die lokal ermittelten Umgebungsinformation (und vorkonfigurierte Geräteinformationen) mit als Teil des "Onboardings" in die lokale Infrastruktur übermittelt. Folgende Informationen, auch als L-Info bezeichnet, können dabei ermittelt werden und in die zusätzlichen Berechtigungsinformation einfließen:
- Bluetooth Beacons B in der Umgebung. Diese können z.B. umfassen:
   ∘ Beacons für die Indoor-Navigation (typischerweise statischer Kontext)
   ∘ Beacons vom Handheld H eines Servicetechnikers (typischerweise dynamischer Kontext, zeitabhängig, Nutzung von Diensten wie Apple FindMe).
   ∘ Beacons von weiteren (unbekannten) Geräten z.B. FD, die sich in Funkreichweite befinden.
- WLAN SSIDs in der Netzwerkumgebung incl. deren Signalstärke (Netzwerkname)
- GPS Informationen, wenn lokaler GPS Empfänger vorhanden ist (z.B. empfangene Satellitennavigationssignale)
- Informationen über identifizierte Geräte (Adressen) in der Nähe als Teil eines automatischen Erkennungsmechnismus
- Weitere Informationen von Sensoren, die helfen eine Einsatzumgebung zu klassifizieren, wie z.B. Temperatur, Luftfeuchtigkeit oder Druck
- Ort (geographische Position; Land, Region, logische Position, z.B. Fertigungshalle, Fertigungszelle, Maschine, Schaltschrank)
- Mandanten-Identifier
- Zugeordneter Geräte-Identifier, Inventarnummer
- Bezeichner einer zugeordneten Maschine (z.B. Werkzeugmaschine, Fräse, Presse), z.B. für ein IoT-Gerät, das Daten der zugeordneten Maschine an ein Backend übertragen soll.
- Zugriffsberechtigte Service-Techniker (Service Access)
- Address-Information (z.B. Router, DNS-Server, NTP-Server, Edge Cloud Server, Logging-Server)
Dabei können die empfangenen Rohdaten oder daraus extrahierte Informationen (z.B. Netzwerkname) übermittelt werden. Insbesondere können Daten ermittelt werden, die die Art des Empfangs charakterisieren:
- Konkret können Zeitstempel bzw. zeitliche Abstände von Empfangsereignissen ermittelt werden. Es wird also eine zeitliche Folge von Empfangs-Ereignissen ermittelt.
- Frequenzband (z.B. WLAN-Band)
- Physical Layer Konfiguration (z.B. Bitrate, Modulationsverfahren)

Diese Informationen werden in der Authentifizierungseinheit S überprüft anhand von Referenz-Berechtigungsinformationen, die von anderen Teilnehmerknoten in vergleichbarer Art ermittelt und an die Authentifizierungseinheit übertragen werden. Alternativ können diese Referenz-Berechtigungsinformationen auch statisch vorkonfiguriert sein. In einer weiteren Ausführungsform ist die Überprüfungseinheit in physikalischer Nähe und kann die Referenz-Berechtigungsinformationen selbstständig ermitteln. So kann der zugriffsberechtigte Servicetechniker beispielsweise fest vorkonfiguriert sein.

Die Information L-Info kann dabei als eigenständige Struktur transportiert werden und hat z.B. die Form eines JSON Web Tokens. Dieser kann durch ein lokal vorhandenes Gerätecredential (IDevID, X.509 Zertifikat und korrespondierender privater Schlüssel) integritätsgeschützt (digital signiert) sein. In einer Ausführungsform kann die L-Info Struktur in die erste Berechtigungsinformation integriert sein, z.B. als Attribut in eine Zertifizierungsanfrage im Rahmen eines Enrollment Protokolls (z.B. EST (RFC 7030), CMP (RFC 4210), CMC (RFC 5272)) mit eingebunden werden. In einer weiteren Ausführungsform kann die Information L-Info auch in einem Voucher Anfrage im Rahmen des BRSKI (draft-ietf-anima-bootstrappingkeyinfra-35) oder SZTP (RFC 8572) eingebettet sein. Diese Voucheranfrage wird typischerweise gegenüber dem Gerätehersteller gestellt. Dieser überprüft die Voucher Anfrage und dabei auch die zusätzlichen Berechtigungsinformationen und stellt daraufhin die Voucher Antwort aus, die zum Aufbau des Vertrauens vom Gerät zur Zieldomäne genutzt wird. In einer weiteren Ausführungsform kann das Gerät FD_new auch ein lokales Schlüsselpaar erzeugen und damit ein selbstsigniertes Zertifikat erstellen, in dem L-INFO als Attribut eingebunden ist. Dieses Schlüsselpaar kann dann zur Anmeldung in einem Netzwerk genutzt werden, wenn kein IDevID Credential auf dem Gerät existiert. L-Info kann dabei alsternativ zu einer JSON Struktur als eine ASN.1 Struktur implementiert sein.
Diese ASN.1 Struktur kann im Rahmen einer Zertifizierungsanfrage (Certificate Signing Request) oder auch in einem Zertifikat direkt als Erweiterung einkodiert werden. Erweiterungen bei Zertifikaten sind generell möglich und werden in Formaten wie X.509 direkt unterstützt, sowohl für Public Key Zertifikate als auch für Attributzertifikate.

In einer weiteren Ausführungsform wird abhängig von einem Ähnlichkeitsvergleich der gemeldeten Funkereignisse (im Backend/Edge) eine Menge von Attributen ermittelt und dem sich registrierenden Gerät zugeordnet und/oder bereitgestellt. Insbesondere kann in der Authentifizierungseinheit ein Geräte-Datensatz für das Gerät FD_new angelegt werden und die ermittelten Attribute können eingetragen werden. Dies hat den Vorteil, dass eine Umgebungsinformation eines Geräts (Service-Techniker, Installationsort, etc.) automatisch ermittelt werden kann und dadurch nicht manuell konfiguriert werden muss. Weiterhin ist es möglich, Attribute dem Gerät im Rahmen der Registrierungsprozedur bereitzustellen, sodass sie auf dem Gerät als Teil der Gerätekonfiguration abgespeichert werden können. Weiterhin ist es möglich, ein digitales Gerätezertifikat zu bilden, das ermittelte Attribute umfasst, und dieses dem Gerät bereitzustellen.
Weiterhin ist es möglich, die (automatische) Registrierung bzw. Inbetriebnahme des Geräts abzuweisen bzw. abzubrechen, wenn die vom Gerät gemeldete Folge von Funkereignissen nicht plausibel ist, d.h. nicht hinreichend gut mit Referenz-Berechtigungsinformationen bzw. -folgen übereinstimmt, die von anderen (bereits registrierten und damit vertrauenswürdigen) Geräten z.B. FD dieses Mandanten stammen.
Weiterhin weist die beschriebene Lösung den Vorteil auf, dass ein hoher Manipulationsschutz erreicht werden kann, da eine hinreichend komplexe, lange Folge von Ereignissen auf Funkebene schwer nachgebildet werden kann, ohne selbst vor Ort zu sein. Dabei wird keine komplexe, speziell geschützte Lokalisierungsinfrastruktur benötigt.

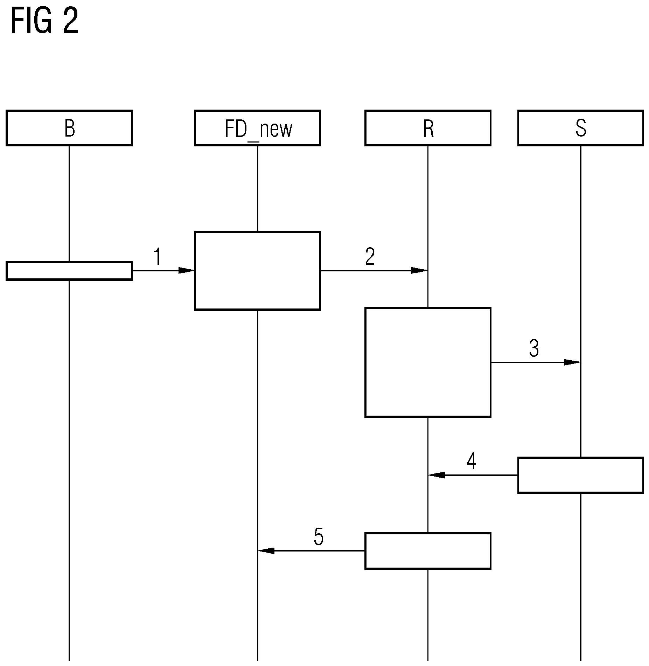

Figur 2 zeigt einen möglichen Nachrichtenverlauf zwischen den verschiedenen Einheiten bzw. Komponenten B, FD_new, R und S innerhalb der oben genannten Anordnung, wobei mögliche Schritte mit 1 bis 5 gekennzeichnet sind.

Das Handheld H oder der Beacon B liefern in Schritt 1 die vorgenannte L-Info als zusätzliche Berechtigungsinformation. Das Gerät FD_new generiert eine Registrierungsinformation und beispielsweise eine Zertifizierungsanfrage, welche in Schritt 2 zur Domänenregistrierungseinheit übermittelt werden. L-Info kann hierbei in die Zertifizierungsanfrage integriert sein. Zusätzlich kann ein lokales Gerätecredential (z.B. IDevID, X.509 Zertifikat und korrespondierender privater Schlüssel) vorhanden sein, mit der die Zertifizierungsanfrage digital signiert ist.

Die Domänenregistrierungseinheit R prüft die Registrierungsinformation und leitet in Schritt 3 die Zertifikatsanfrage an die Authentifizierungseinheit S weiter. Die Authentifizierungseinheit S sendet in Schritt 4 eine Zertifikatsbestätigung zurück an die Domänenregistrierungseinheit R, wenn die vorgenannte Überprüfung der zweiten zusätzlichen Berechtigungsinformation positiv ist. In Schritt 5 erhält das Gerät FD_new ebenfalls eine Zertifikatsbestätigung. Damit wird eine Domänenregistrierung zulässig und eine Durchführung der Inbetriebnahme des Geräts ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Inbetriebnahme eines Gerätes (FD new) innerhalb einer in ein oder mehrere Domänen (D) unterteilten Netzwerkumgebung (NW), aufweisend folgende Schritte:
a) Authentisieren des Gerätes an einer für die Netzwerkumgebung zuständigen Authentifizierungseinheit (S) anhand einer Berechtigungsinformation,
b) Überprüfen einer zusätzlichen Berechtigungsinformation, die über das Gerät von einer dritten Stelle (H), die in derselben die in derselben physikalischen Umgebung angeordnet oder derselben Domäne wie das Gerät registriert ist, an die Authentifizierungseinheit übermittelt wird, gegenüber einer vorkonfigurierten oder ermittelten und /oder erhaltenen Referenz-Berechtigungsinformation,
c) wobei daraus ein positives Überprüfungsergebnis resultiert, wenn die zusätzliche Berechtigungsinformation mit der Referenz-Berechtigungsinformation zu mindestens einem vorgebbaren Grad übereinstimmt,
d) und direkt oder indirekt an eine Domänenregistrierungseinheit (R) der Domäne weitergegeben wird,
e) Zulassen der Registrierung des Geräts an der Domänenregistrierungseinheit bei positivem Prüfungsergebnis,
f) Durchführung der Inbetriebnahme des Geräts nach erfolgreicher Registrierung, oder
g) Zurückweisen der Authentifikation des Gerätes bei einem negativen Überprüfungsergebnisses.

2. Verfahren nach dem vorhergehenden Anspruch, **dadurch gekennzeichnet, dass** die Schritte b), c), d), e), f) oder b), c), d), g) in einem oder mehreren vorgebbaren zeitlichen Abständen oder nach einem oder mehreren Ereigniseintritten wiederholt werden.

3. Verfahren nach einem der vorhergehenden Ansprüche, **dadurch gekennzeichnet, dass** die zusätzliche Berechtigungsinformation statische und/oder dynamische Netzzugangsinformationen umfasst.

4. Verfahren nach einem der vorhergehenden Ansprüche, **dadurch gekennzeichnet, dass** die zusätzliche Berechtigungsinformation geographische Informationen zum Gerät umfasst.

5. Verfahren nach einem der vorhergehenden Ansprüche, **dadurch gekennzeichnet, dass** die zusätzliche Berechtigungsinformation Gerät identifizierende Informationen und/oder Mandanten-Identifikationsinformation umfasst.

6. Verfahren nach einem der vorhergehenden Ansprüche, **dadurch gekennzeichnet, dass** die zusätzliche Berechtigungsinformation eine Adressinformation zur Authentifizierungseinheit umfasst, wenn die Authentifizierungseinheit abgesetzt außerhalb der Domäne und/oder der Netzwerkumgebung angeordnet ist.

7. Verfahren nach einem der vorhergehenden Ansprüche, **dadurch gekennzeichnet, dass** die zusätzliche Berechtigungsinformation in eine Zertifikatsanfrage vom Gerät an die Authentifizierungseinheit oder in ein vom Gerät selbst ausgestelltes Zertifikat eingebettet ist.

8. Gerät (FD_new), das zur Inbetriebnahme innerhalb einer in ein oder mehrere Domänen (D) unterteilbaren und/oder unterteilten Netzwerkumgebung (NW) geeignet ist, aufweisend:
a) zumindest eine Einheit zum Authentisieren des Gerätes an einer für die Netzwerkumgebung zuständigen Authentifizierungseinheit (S) anhand einer Berechtigungsinformation,
b) zumindest einer Einheit zum Übermitteln einer zusätzlichen Berechtigungsinformation zur Überprüfung an die Authentifizierungseinheit, wobei das Gerät von einer dritten Stelle (H), die in derselben physikalischen Umgebung angeordnet und/oder in derselben Domäne wie das Gerät registriert ist , die zusätzliche Berechtigungsinformation erhält,
c) wobei aus der Überprüfung ein positives Überprüfungsergebnis resultiert, wenn die zusätzliche Berechtigungsinformation mit der Referenz-Berechtigungsinformation zu mindestens einem vorgebbaren Grad übereinstimmt,
d) und das Überprüfungsergebnis direkt oder indirekt an eine Domänenregistrierungseinheit (R) der Domäne weitergegeben wird, und
e) zumindest eine Inbetriebnahmeeinheit, die dazu ausgelegt ist, das Geräts bei positivem Überprüfungsergebnis nach einer erfolgreichen Registrierung des Geräts an der Domänenregistrierungseinheit in Betrieb zu nehmen.

9. Authentifizierungseinheit (S) zuständig für eine Netzwerkumgebung (NW), in der ein Gerät in Betrieb genommen werden kann, aufweisend:
a) zumindest eine Einheit zum Authentisieren eines Gerätes (FD_new),
b) zumindest eine Einheit zum Überprüfen eine zusätzlichen Berechtigungsinformation, die über das Gerät von einer dritten Stelle (H) übermittelt wird, gegenüber einer vorkonfigurierten oder ermittelten und/oder erhaltenen Referenz-Berechtigungsinformation,
c) wobei daraus ein positives Überprüfungsergebnis resultiert, wenn die zusätzliche Berechtigungsinformation mit der Referenz-Berechtigungsinformation zu mindestens einem vorgebbaren Grad übereinstimmt, und
d) zumindest eine Einheit zur Ausgabe des Überprüfungsergebnisses an das Gerät mit dem Zweck der Durchführung und/oder Zurückweisung dessen Inbetriebnahme.

10. Authentifizierungseinheit nach dem vorhergehenden Anspruch, **dadurch gekennzeichnet, dass** die zusätzliche Berechtigungsinformation eine Adressinformation zur Authentifizierungseinheit umfasst, wenn die Authentifizierungseinheit abgesetzt außerhalb der Domaine oder der Netzwerkumgebung angeordnet ist.

11. Domainregistrierungseinheit (D) für eine Inbetriebnahme eines Gerätes innerhalb einer in ein oder mehrere Domänen unterteilten Netzwerkumgebung, aufweisend:
- eine Empfangseinheit, die dazu ausgelegt ist, ein Überprüfungsergebnis direkt oder indirekt von einer Authentifizierungseinheit zu empfangen, welche eine zusätzliche Berechtigungsinformation gegenüber einer Referenz-Berechtigungsinformation überprüft und
- zumindest eine Inbetriebnahmeeinheit, die dazu ausgelegt ist, das Geräts bei positivem Überprüfungsergebnis für eine Inbetriebnahme zu registrieren.

12. Anordnung umfassend das Gerät nach Anspruch 8, eine Authentifizierungseinheit nach Anspruch 9 und eine Domänenregistrierungseinheit nach Anspruch 11.

13. Computerprogrammprodukt, das verteilt in einen Speicher einer Authentifizierungseinheit und in einem Speicher in einem Gerät gespeichert ist und/oder gespeichert wird und jeweils in eine Prozessoreinheit ladbar ist, umfassend Programmcodeteile, die dazu ausgelegt sind, das Verfahren nach einem der vorhergehenden Verfahrensansprüchen auszuführen.
